# EUROPEAN PATENT SPECIFICATION

(11) **EP 0 643 117 B1**
(45) Date of publication and mention of the grant of the patent: **30.07.1997**
(21) Application number: 94113672.3
(22) Date of filing: 01.09.1994
(51) Int. Cl.: C09J 121/00, C08L 21/00, B60C 1/00

(54) **Rubber based adhesive composite and tire with tread prepared therewith**
Kleberzusammensetzung auf Basis von Gummi und Fahrzeugreifen damit hergestellten Laufstreifen
Composition adhésive à base de caoutchouc et pneu avec bande de roulement fabriquée à l'aide de celle-ci

(30) Priority: 14.09.1993 US 121384
(43) Date of publication of application: 15.03.1995
(73) Proprietor: THE GOODYEAR TIRE & RUBBER COMPANY, Akron, Ohio 44316-0001 (US)
(72) Inventor: Kansupada, Bharat Kanchanlal, Mogadore, Ohio 44260 (US); Majumdar, Ramendra Nath, Hudson, Ohio 44236 (US); Handa, Pawan Kumar, Akron, Ohio 44313 (US); Stevenson, William Gary, NW, Uniontown, Ohio 44685 (US); Barnes, Robert Elmer, Hudson, Ohio 44236 (US)
(74) Representative: Leitz, Paul

(56) References cited:
- EP-A- 0 116 871
- US-A- 4 359 078
- US-A- 4 539 365
- US-A- 5 001 185

## Description

### Field

This invention relates to a composite of a flexible, releasable backing having a particularly thin, sulfur vulcanizable, carbon black filled, rubber based adhesive composition in a form of a strip as a coating thereon. Such thin composite, or strip, is to be used for application of the adhesive composition to a rubber tire tread splice. The invention also relates to a method of preparing tire treads and to a tire with tread prepared thereby.

### Background

Rubber tires are often prepared in a manufacturing process by first building a tire carcass and then building a tire tread thereover. The tire tread is conventionally applied to the tire carcass as a relatively flat, wide, sometimes somewhat contoured, uncured rubber strip which is wound around the carcass with the ends of the rubber strip meeting to form a splice. The ends of the rubber tread strip are usually skived, or cut at an angle, so that the spliced ends overlap each other. Such procedural constructions are well known to those having skill in such art.

Generally it is desired that the uncured rubber tread strip has a degree of tackiness, sometimes referred to as building tack, so that the tread splice holds together after its construction and is suitable for the subsequent tire cure step.

However, the uncured tread strip often does not have sufficient natural building tack for such purpose.

Therefore, an adhesive is often applied to the faces of the opposing surfaces of the tire tread strip so that they have sufficient building tack and so that the indicated tread splice can become more secure. For this operation, it is common to apply a solvent-based adhesive rubber composition - usually referred to as a cement - to one, and sometimes both, faces of the opposing tire tread splice ends.

Examples of various cements for such purpose and tread splices joined by a rubber composition, in general, may be referred to in one or more of US-A- 3 335 041; 3 421 565; 3 342 238; 3 514 423; 4 463 120 and 4 539 365. It is readily observed that such exemplary cements are typically based on, for example, solvent solutions of compositions comprised of, for example, a base rubber, hydrocarbon oil, carbon black, tackifier resin and curative.

However, for a number of purposes, it is desired to provide a tire tread splice adhesive which can suitably be utilized without the aid of a solvent based rubber composition. In other words, a dry adhesive composition is desired.

Preparation and use of a dry adhesive (without solvent) is, in general, considered a departure from typical prior tread splice cement preparations.

In one aspect, prior to this invention, a sulfur vulcanizable, carbon black filled, adhesive coated film has been previously provided for application of an adhesive strip to join tread splices, where the adhesive strip has a thickness of 254 to 508 µm (10 to 20 mils) and where the adhesive strip is composed of a blend of two or more rubbers selected from cis 1,4-polyisoprene rubber, cis 1,4-polybutadiene rubber, and styrene/butadiene copolymer rubber, as well as carbon black, processing oil, rosin oil and sulfur. However, the thickness of 254-508 µm (10-20 mils) of such adhesive composition, in some cases, is considered to be too thick for practical or effective application to uncured rubber tire tread splices in the manufacture of rubber tires. Further, US-A- 4 539 365 discloses a cement for use in tire tread splicing to be applied as a solvent mixture of a defined and characterized composition composed of prescribed amounts of natural rubber, cis-butadiene rubber, carbon black, alkyl-phenol tackifying resin.

However, it is desirable to provide an extremely thin, dry, in a sense of not being organic solvent based, sulfur curable adhesive composition for application to uncured tire tread ends to effectively form a durable splice therebetween.

Indeed, it is considered herein that there is a need for an exceptionally thin strip of an adhesive composition for use in the splicing of tire tread strip ends in the manufacture of a tire, particularly a pneumatic tire.

### Disclosure and Practice of the Invention

In accordance with this invention, a composite of a flexible, releasable backing having a sulfur vulcanizable, carbon black filled, adhesive rubber composition coating, or strip, thereon, where the adhesive rubber composition is comprised of, based on 100 parts by weight rubber, (A) 35 to 70 parts by weight (phr) cis 1,4-polyisoprene natural rubber and, correspondingly, 30 to 65 phr of at least one diene based rubber, preferably selected from at least one of synthetic cis 1,4-polyisoprene rubber and cis 1,4-polybutadiene rubber and styrene/butadiene copolymer rubber; (B) up to 10 phr of styrene/butadiene copolymer rubber; (C) 35 to 55, preferably 35 to 45, parts by weight carbon black; (D) 4 to 12, preferably 5 to 10, phr rubber processing oil; (E) 2 to 10, preferably 2 to 8, phr nonreactive phenol-formaldehyde resin; (F) up to 15, optionally 2 to 10, phr rosin oil; and (G) 1.5 to 3, preferably 1 to 2.5, phr insoluble sulfur in a blend of sulfur and processing oil containing 60 to 85 weight percent insoluble sulfur; wherein said adhesive rubber composition strip has a thickness of 25 to 152 µm, preferably 76 to 127 µm (1 to 6 mils, preferably 3 to 5 mils) and is prepared by casting the adhesive rubber composition as a dispersion in a volatile organic solvent onto said backing and drying the composition to remove the solvent and, thus, form the strip as a coating thereon.

In further accordance with this invention, a method of preparing a pneumatic rubber tire is provided which comprises building an outer unvulcanized rubber tread strip circumferentially around an unvulcanized rubber carcass, joining the ends of said tread strip with the unvulcanized adhesive rubber composition strip of this invention and vulcanizing the resulting assembly under conditions of heat and pressure; wherein, prior to the vulcanization step, the said unvulcanized adhesive rubber composition strip has been applied to one tread strip end from a releasable flexible backing following which the flexible backing is removed from the adhesive rubber composition strip and the tread strip ends pressed together with said adhesive rubber composition strip therebetween prior to said vulcanization step.

In additional accordance with this invention, a tire is provided which is prepared by such method.

An important aspect of the invention is that the sulfur vulcanizable adhesive strip is exceptionally thin and has a thickness of only 25 to 152 µm, preferably 76 to 127 µm (1 to 6 mils, preferably 3 to 5 mils) and, also, in order to create the thin strip, that the strip is prepared by casting from a volatile organic solvent onto the backing in order to achieve the thin strip as a coating therein, which is not considered herein as being readily or reasonably possible without solution casting the adhesive composition onto the backing.

The thinness of the adhesive coating is considered as being an important and significant departure from a prior use of other or similar adhesive composition(s) having a thickness of 254 to 508 µm (10 to 20 mils) because the thin adhesive composition applied at the tire splice aids in reducing the ratio of weight of strip composition to the tread itself at the tread splice, thus, maintaining tire uniformity and is considered herein as improving tire uniformity as compared to a utilization of the thicker adhesive composition strip.

In one aspect, it is desirable for the adhesive composition to have a green adhesion value in a range of 4 to 12 Newtons.

In another aspect, it is preferred that the adhesive rubber strip and, thus, such a strip in a tire having its tread strips joined by such an adhesive rubber strip, contain not more than 2, preferably less than 1, phr of a total of stearic acid, waxes, peptizers and antidegradant(s) based on paraphenylene diamine, if it contains any of such ingredients. The purpose is to reduce, or essentially eliminate any substantial blooming thereof on the exposed surface of the strip when it is a part of the splice.

An insoluble sulfur is specified for use in the adhesive composition. Conventional sulfur is considered to be of a rhombic type and insoluble sulfur is of a polymerized type. Such sulfurs are known to those having skill in the rubber art. The insoluble sulfur is prescribed herein because it has a considerably less tendency to migrate through the rubber composition to its surface to appear as an unwanted bloom. Such insoluble sulfur is conventionally utilized as a mixture of the sulfur and oil, such as a rubber processing oil, for mixing with various rubber compositions. The amount of insoluble sulfur is reported herein as the weight or amount of sulfur itself and not as the blend of both sulfur and oil.

The oil used in such blend can conventionally be of the rubber processing oil type and is exclusive of and not included in the (D) rubber processing oil component description of the adhesive composition.

The nonreactive phenol formaldehyde resin is considered herein as being well known to those skilled in the art.

In the practice of this invention, the thin, sulfur vulcanizable adhesive strip of this invention is prepared by casting a volatile organic solvent dispersion, or solution, of the adhesive composition onto a flexible backing and drying the solution. Thus, the strip is in a form of a coating on a flexible backing. The casting procedure enables the preparation of the extremely thin adhesive composition.

It is considered herein that conventional rubber calendering process will not effectively produce the thin gage adhesive strip required by this invention.

Various solvents can be used to prepare such dispersion, or solution, of the adhesive composition and the selection of the solvent is not considered as being a critical feature of the invention, although it is likely that some solvents will preform better than others. One example of a solvent might be, for instance, a mixture of n-heptane with methylcyclohexane and/or dimethylcyclopentane. Other solvents might be, for example, n-hexane, cyclohexane and toluene.

Various backing materials can be used for the composite of this invention and their selection is not considered critical so long as the backing is flexible and will suitably release from the thin coating of the adhesive rubber composition. Thus, it is desirable for the backing to be releasable from the strip, or coating, upon application the green, or uncured, tread rubber strip and, also, that any coating on the backing be essentially non-transferable onto the uncured tread rubber as the strip is applied to the tread splice. One having skill in such art will understand the significance of such requirements.

It is considered that the backing is needed because the coating is so thin that it will not suitably or practically support itself without the aid of the backing.

Representative of such backing materials are, for example, polyethylene film, polypropylene film or other films, particularly when such films have a silicone coating thereon, and silicone coated paper. It would be understood by one having skill in such art that such silicone coated backing would be coated with a silicone which would not transfer to the adhesive strip, or coating, itself. It is considered herein that a transfer of a silicone polymer onto the strip would interfere with the adhesion of the strip to the tread splice and, thus, would not be desirable.

In the practice of this invention, a blend of at least two of the said rubbers is required and a blend of at least three of the cis 1,4-polyisoprene, cis 1,4-polybutadiene and styrene/butadiene copolymer rubbers is preferred in order to provide an adhesive with suitable compatibility with conventional sulfur curable tire tread rubber compositions while presenting suitable cured strength and elongation coupled with an uncured tack (when combined with the remainder of the ingredients) and processing characteristics. In practice, the cis 1,4-polyisoprene rubber is preferably natural rubber.

The high carbon black loading in the strip is used to provide rubber reinforcement and promote high green (uncured) strength for the composition's processability.

The rubber processing oil is used to aid in providing tack and composition processability.

The rubber processing oil can be aromatic and/or paraffinic. Rubber processing oils are well known to those having skill in such art.

The non-reactive phenol-formaldehyde resin is used to add tack to the adhesive composition. It is used in a relatively small amount to add tack while maintaining processability and ease of handling and application.

In one aspect, non-reactive phenol-formaldehyde resin utilization can be reduced by using a relatively high level, or amount, of the rosin oil and a relatively low level, or amount, of the resin.

In the practice of this invention, it is understood that suitable rubber compounding ingredients can be added to the composition including antidegradants, pigments, zinc oxide, stearic acid, zinc stearate and cure accelerators.

The styrene/butadiene copolymer rubber, if used, is utilized to compatibilize the adhesive to a rubber substrate. However, it is considered herein that, in general, the copolymer rubber tends to reduce the tack of the resultant strip of the cement composition and, therefore, is intended, or preferred, to be utilized only in minimal amounts if it is used at all.

In the practice of this invention, the adhesive can be applied by suitable means from its flexible backing such as by application to one end of the relatively wide, thick tread strip as a relatively narrow, thin strip having a thickness of 25 to 127 µm (1 to 5 mils), followed by removing the backing.

In the further practice of this invention, a vulcanized rubber tire is provided wherein, the said tire, when unvulcanized, has its tread splice joined by a very thin layer of 25-152 µm, preferably 76-127 µm thickness (1-6 mils, preferably 3-5 mils thickness) of a sulfur-vulcanizable, carbon black filled, rubber based self-adhering rubber adhesive of this invention.

Thus, a pneumatic rubber tire is provided having an outer, sulfur cured rubber tread in the form of a circumferential rubber strip with its ends joined and adhered together through the sulfur cured adhesive rubber composition of this invention.

In one aspect, a pneumatic rubber tire is prepared by building an outer unvulcanized rubber tread strip circumferentially around an unvulcanized rubber carcass, joining the ends of the said unvulcanized tread strip with the unvulcanized adhesive rubber composition of this invention and vulcanizing the resulting assembly under conditions of heat and pressure.

It is to be appreciated that the preparation of the tire carcass, application or building of the tread onto the carcass and the vulcanizing, or curing, of the assembly in a suitable mold under conditions of pressure and elevated temperature are well known to those having skill in such art.

The following examples are provided which are intended to be illustrative in nature and the parts and percentages are by weight unless otherwise indicated.

### EXAMPLE I

Adhesive compositions were prepared by first mixing materials together in a suitable rubber mixer to form a compounded rubber. The compounded rubber is mixed with and dispersed in an organic solvent to form a cement. The terms "compounded rubber" and "cement" are well known to those skilled in such art. The materials are illustrated in the following Table 1 in terms of their associated cement compositions which are referred to in Table 1 as Experiments (Exp's) A, B and C.

The solutions of the individual adhesive compositions (cements) were then cast as their volatile organic solvent dispersion onto a silicone coated paper and dried to form a very thin sulfur curable, carbon black filled, rubber adhesive coating on the silicone coated paper with a thickness of the dried coating, or film, being in a range of 76-127 µm (3-5 mils).

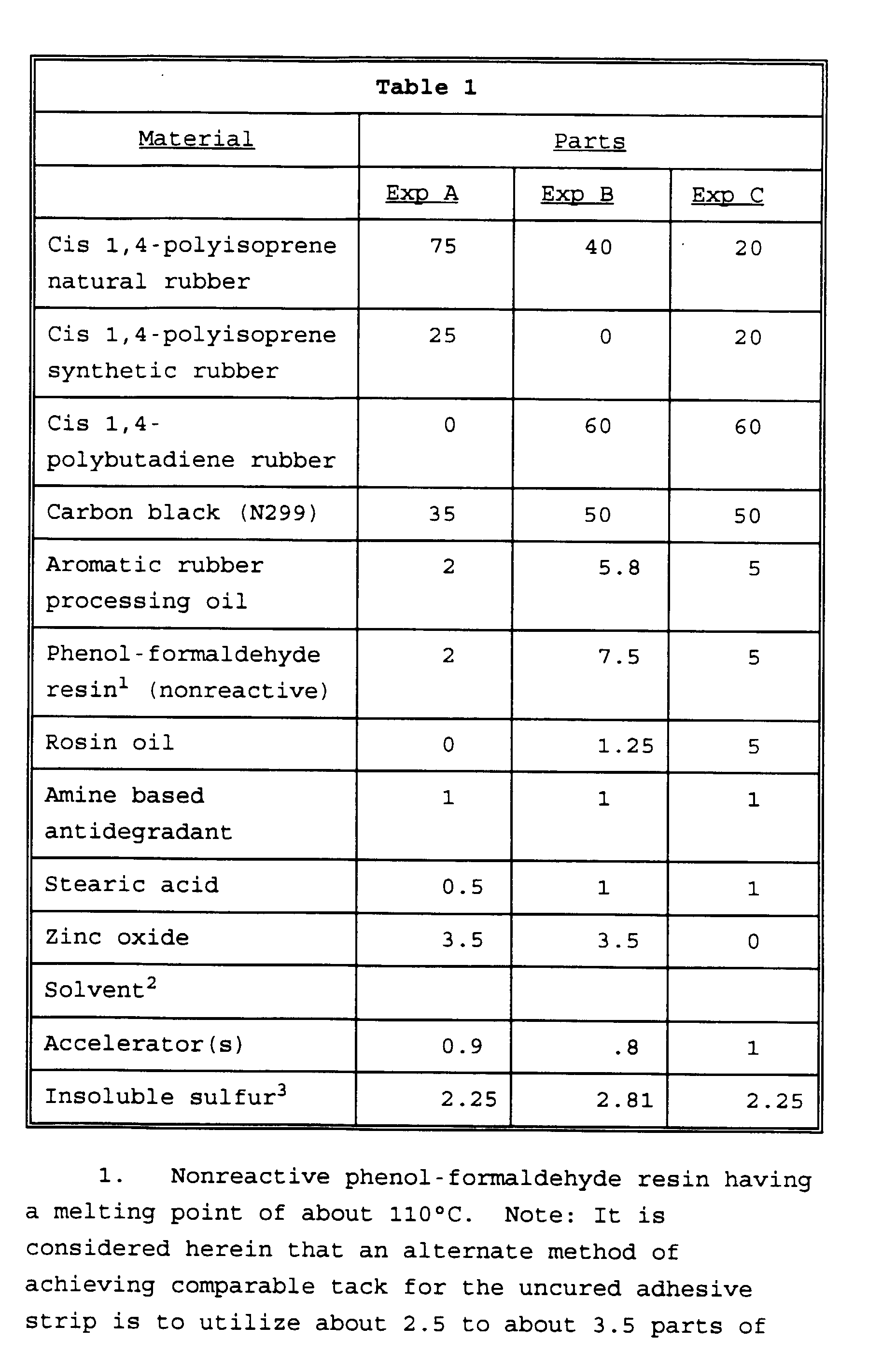

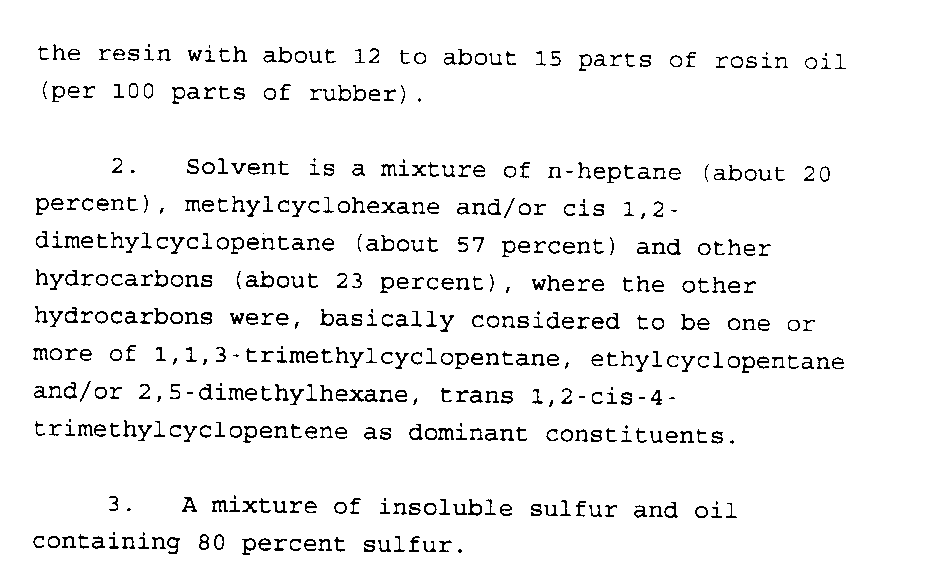

Adhesion tests were conducted with the A, B and C strips, both in their green, or uncured, state and in a cured state.

For the cured adhesion values for the A, B and C strips, a cured adhesion test was conducted by what is known as a Strebler adhesion test to determine interfacial adhesion between cured rubber samples with the adhesive strip therebetween. For the test, two uncured, sulfur curable, compounded rubber samples were obtained as blends of 50 parts cis 1,4-polyisoprene rubber and 50 parts styrene/butadiene copolymer rubber or 10 parts cis 1,4-polybutadiene rubber, 20 parts cis 1,4-polyisoprene rubber and 70 parts styrene/butadiene copolymer rubber together with conventional rubber compounding ingredients including sulfur curative(s). The adhesive strip of this invention was applied to the surface of one of the samples. The samples were placed together, face to face, with the adhesive strip therebetween and with a Mylar® film placed between one sample and the adhesive strip which has been applied to the surface of the other sample. The Mylar® film had a window, or rectangular hole, through which one sample and the adhesive strip on the other sample contacted each other. The samples and adhesive strip were cured by heating the assembly to a temperature of about 150°C for about 28 minutes. The adhesion values were determined by pulling one rubber sample from another with their ends being pulled apart at a 180° angle to each other using an Instron force displacement machine at a crosshead speed of 20 inches (about 51 cm) per minute. An average adhesion value of about 50 to about 70 Newtons was determined for the A, B and C strips.

Similarly, a green adhesion (tack) test was conducted with the A, B and C strips in their uncured state. A crosshead speed of 5 inches (about 13 cm) per minute was used. This is referred to herein as green tack test and green adhesion, or tack, values. An average adhesion value of about 4 to about 12 Newtons was determined for the A, B and C strips. This can be referred to herein as green adhesion.

The results of the adhesion tests with the green, or uncured strips, are considered as demonstrating adequate building tack for their use in a tire building process applicable for joining the ends of an uncured tread strip.

### EXAMPLE II

A pneumatic rubber tire was prepared by first building a carcass on a tire building drum, a process relatively well-known to those having skill in such art, over which is then applied a circumferential tread rubber strip with its ends meeting in a splice to which one end is applied to the adhesive of Example I. The adhesive of Example I is applied to the tread strip end from the silicone coated paper backing as an adhesive strip following which the silicone coated paper is removed and the unvulcanized tread ends joined together with the sulfur curable adhesive strip therebetween as a splice. The adhesive strip is of a thickness of 76-127 µm (3-5 mils).

The tire composite, or assembly, is placed in a suitable tire cure mold and the tire vulcanized therein under conditions of heat and pressure.

The extremely thin adhesive strip [76-127 µm (3-5 mils)] is considered herein to be a particular advantage because it does not add significant weight at the tread splice, thus, maintaining tire uniformity in a sense of being comparable to using a thin coating of a solvent based cement for such purpose.

It is considered herein that the performance of the adhesive strip in joining tread strip splice was comparable to conventional organic solvent based rubber cements for such purpose which, in turn, is considered to be an important advance in the building technique of tires, insofar as the building of the tread thereon is concerned.

## Claims

1. A composite of a flexible, releasable backing characterized by having a sulfur vulcanizable, carbon black filled, adhesive rubber composition coating in a form of an adhesive rubber strip, thereon, where the adhesive rubber composition is comprised of, based on 100 parts by weight rubber;
(A) 35 to 70 parts by weight (phr) cis 1,4-polyisoprene natural rubber and, correspondingly, 30 to 65 phr of at least one of synthetic cis 1,4-polyisoprene rubber and cis 1,4-polybutadiene rubber;
(B) up to 10 phr of styrene/butadiene copolymer rubber;
(C) 35 to 55 parts by weight carbon black;
(D) 1 to 10 phr rubber processing oil;
(E) 2 to 10 phr nonreactive phenol-formaldehyde resin;
(F) up to 15 phr of rosin oil; and
(G) 1.5 to 3 phr insoluble sulfur in a blend of insoluble sulfur and processing oil containing 60 to 80 weight percent sulfur;
wherein said adhesive rubber composition is prepared by casting the adhesive rubber composition as a dispersion in a volatile organic solvent onto said backing and drying the composition to remove the solvent.

2. The composite of claim 1 wherein said adhesive rubber composition strip has a thickness of 25-152 µm (1 to 6 mils).

3. The composite of claim 1 or 2 wherein the adhesive rubber strip contains not more than 2 phr of a total of stearic acid, waxes, peptizers and antidegradant(s) based on paraphenylene diamine if it contains any of such ingredients.

4. A pneumatic rubber tire characterized by having an outer rubber tread in the form of a circumferential rubber strip with its ends joined and adhered together through the adhesive rubber composition strip of any of claims 1-3.

5. A method of preparing a pneumatic rubber tire characterized in that it comprises building an outer unvulcanized rubber tread strip circumferentially around an unvulcanized rubber carcass, joining the ends of said tread strip with the unvulcanized adhesive rubber composition strip of any of claims 1-3 and vulcanizing the resulting assembly under conditions of heat and pressure; wherein said unvulcanized adhesive rubber composition strip is applied to one tread strip end from a releasable flexible backing following which the flexible backing is removed from the adhesive rubber composition strip and the tread strip ends pressed together with said adhesive rubber composition strip therebetween prior to said vulcanization step.

6. The tire prepared according to the method recited in claim 5 wherein the rubber component of the adhesive composition is comprised essentially of 35 to 70 phr of cis 1,4-polyisoprene natural rubber and, correspondingly, 30 to 65 phr of synthetic cis 1,4-polyisoprene rubber.

7. The tire prepared according to the method recited in claim 5 wherein the rubber component of the adhesive composition is comprised essentially of 35 to 70 phr of cis 1,4-polyisoprene natural rubber and, correspondingly, 30 to 65 phr of cis 1,4-polybutadiene rubber.

8. The tire prepared according to the method recited in claim 5 wherein the adhesive rubber strip contains 2 to 10 phr of rosin oil.

## Patentansprüche

1. Verbundmaterial eines flexiblen, ablösbaren Trägers, dadurch gekennzeichnet, daß dieser einen Überzug aus Schwefel-vulkanisierbarer, Ruß-gefüllter, Kautschuk-Klebstoff-Zusammensetzung in Form eines Kautschuk-Klebstoffstreifens darauf aufweist, wobei die Kautschuk-Klebstoff-Zusammensetzung bezogen auf 100 Gew.-Teile Kautschuk umfaßt:
(A) 35 bis 70 Gewichtsteile (ThK) cis-1,4-Polyisopren-Naturkautschuk und entsprechend 30 bis 65 ThK synthetischen cis-1,4-Polyisopren-Kautschuk und/oder cis-1,4-Polybutadien-Kautschuk;
(B) bis zu 10 ThK Styrol/Butadien-Copolymer-Kautschuk;
(C) 35 bis 55 Gewichtsteile Ruß;
(D) 1 bis 10 ThK Kautschuk-Weichmacheröl;
(E) 2 bis 10 ThK nicht-reaktives Phenol-Formaldehyd-Harz;
(F) bis zu 15 ThK Harzöl; und
(G) 1,5 bis 3 ThK unlöslichen Schwefel in einer Mischung von unlöslichem Schwefel und Weichmacheröl, die 60 bis 80 Gewichtsprozent Schwefel enthält;
wobei die Kautschuk-Klebstoff-Zusammensetzung durch Gießen der Kautschuk-Klebstoff-Zusammensetzung als Dispersion in einem flüchtigen organischen Lösungsmittel auf den Träger und Trocknung der Zusammensetzung zwecks Entfernung des Lösungsmittels hergestellt ist.

2. Verbundmaterial nach Anspruch 1, in welchem der Streifen aus Kautschuk-Klebstoff-Zusammensetzung eine Dicke von 25-152 µm (1 bis 6 Mil) aufweist.

3. Verbundmaterial nach Anspruch 1 oder 2, in welchem der Kautschuk-Klebstoff-Streifen nicht mehr als insgesamt 2 ThK Stearinsäure, Wachse, Peptisiermittel und Antiabbaumittel auf Basis von para-Phenylendiamin enthält, wenn er irgendwelche derartige Bestandteile enthält.

4. Gummi-Luftreifen, dadurch gekennzeichnet, daß er eine äußere Kautschuk-Lauffläche in Form eines außen umlaufenden Kautschukstreifens aufweist, dessen Enden über den Streifen aus Kautschuk-Klebstoff-Zusammensetzung nach irgendeinem der Ansprüche 1-3 verbunden und zusammengeklebt sind.

5. Verfahren zur Herstellung eines Gummi-Luftreifens, dadurch gekennzeichnet, daß es umfaßt das Bauen eines äußeren unvulkanisierten Kautschuk-Laufflächenstreifens um den äußeren Umfang einer unvulkanisierten Kautschukkarkasse herum, das Verbinden der Enden des Laufflächenstreifens mit dem Streifen aus unvulkanisierter Kautschuk-Klebstoff-Zusammensetzung nach irgendeinem der Ansprüche 1-3 und das Vulkanisieren des resultierenden Aufbaus unter Bedingungen von Wärme und Druck; in welchem der Streifen aus unvulkanisierter Kautschuk-Klebstoff-Zusammensetzung von einem ablösbaren flexiblen Träger auf ein Ende des Laufflächenstreifens aufgebracht wird, worauf der flexible Träger von dem Streifen aus Kautschuk-Klebstoff-Zusammensetzung entfernt wird und die Enden des Laufflächenstreifens vor der Vulkanisationsstufe mit dem dazwischenliegendem Streifen aus Kautschuk-Klebstoff-Zusammensetzung zusammengepreßt werden.

6. Reifen, hergestellt gemäß dem in Anspruch 5 angegebenen Verfahren, in welchem die Kautschuk-Komponente der Klebstoffzusammensetzung im wesentlichen 35 bis 70 ThK cis-1,4-Polyisopren-Naturkautschuk und entsprechend 30 bis 65 ThK synthetischen cis-1,4-Polyisopren-Kautschuk umfaßt.

7. Reifen, hergestellt gemäß dem in Anspruch 5 angegebenen Verfahren, in welchem die Kautschuk-Komponente der Klebstoffzusammensetzung im wesentlichen 35 bis 70 ThK cis-1,4-Polyisopren-Naturkautschuk und entsprechend 30 bis 65 ThK cis-1,4-Polybutadien-Kautschuk umfaßt.

8. Reifen, hergestellt gemäß dem in Anspruch 5 angegebenen Verfahren, in welchem der Kautschuk-Klebstoffstreifen 2 bis 10 ThK Harzöl enthält.

## Revendications

1. Composite d'une couche dorsale flexible amovible, caractérisé par le fait qu'on lui applique un revêtement d'une composition adhésive de caoutchouc, contenant des matières de remplissage de noir de carbone et vulcanisable au soufre, sous la forme d'une bande de caoutchouc adhésive, dans lequel la composition adhésive de caoutchouc comprend, basées sur 100 parties en poids de caoutchouc:
(A) de 35 à 70 parties en poids (phr) de caoutchouc naturel de cis-1,4-polyisoprène et, de manière correspondante, de 30 à 65 phr d'au moins un caoutchouc choisi parmi le caoutchouc synthétique de cis-1,4-polyisoprène et le caoutchouc de cis-1,4-polybutadiène;
(B) jusqu'à concurrence de 10 phr d'un caoutchouc de copolymère de styrène/butadiène;
(C) de 35 à 55 parties en poids de noir de carbone;
(D) de 1 à 10 phr d'huile plastifiante pour le caoutchouc;
(E) de 2 à 10 phr de résine de phénol-formaldéhyde non réactive;
(F) jusqu'à concurrence de 15 phr d'huile de résine; et
(G) de 1,5 à 3 phr de soufre insoluble dans un mélange de soufre insoluble et d'huile plastifiante contenant du soufre à concurrence de 60 à 80% en poids;
dans lequel on prépare ladite composition adhésive de caoutchouc en coulant la composition adhésive de caoutchouc sous forme d'une dispersion dans un solvant organique volatil sur ladite couche dorsale et en séchant la composition pour éliminer le solvant.

2. Composite selon la revendication 1, dans lequel ladite bande de la composition adhésive de caoutchouc possède une épaisseur de 25-152 µm (1 à 6 millièmes de pouce).

3. Composite selon la revendication 1 ou 2, dans lequel la bande de caoutchouc adhésive ne contient au total pas plus de 2 phr d'acide stéarique, de cires, d'agents de peptonisation et d'antidégradant(s) à base de paraphénylènediamine, si elle contient l'un quelconque des ingrédients de ce type.

4. Bandage pneumatique en caoutchouc caractérisé par le fait qu'il possède une bande de roulement externe en caoutchouc sous la forme d'une bande de caoutchouc circonférentielle dont les extrémités sont jointes et adhèrent l'une à l'autre via la bande de la composition adhésive de caoutchouc selon l'une quelconque des revendications 1 à 3.

5. Procédé de préparation d'un bandage pneumatique en caoutchouc, caractérisé en ce qu'il comprend le fait de monter un boudin de mélange pour bande de roulement externe en caoutchouc non vulcanisé en direction circonférentielle autour d'une carcasse en caoutchouc non vulcanisé, de joindre les extrémités dudit boudin de mélange pour bande de roulement avec la bande de la composition adhésive de caoutchouc non vulcanisé selon l'une quelconque des revendications 1 à 3 et de vulcaniser l'assemblage résultant dans des conditions de chaleur et de pression; dans lequel on applique ladite bande de la composition adhésive de caoutchouc non vulcanisé sur une extrémité du boudin de mélange pour bande de roulement à partir de la couche dorsale flexible amovible, après quoi, on retire la couche dorsale flexible de la bande de la composition adhésive de caoutchouc et on presse les extrémités du boudin de mélange pour bande de roulement l'une contre l'autre en intercalant ladite bande de la composition adhésive de caoutchouc avant de procéder à ladite étape de vulcanisation.

6. Pneumatique préparé conformément au procédé selon la revendication 5, dans lequel le composant de caoutchouc de la composition adhésive comprend essentiellement de 35 à 70 phr de caoutchouc naturel de cis-1,4-polyisoprène et, de manière correspondante, de 30 à 65 phr de caoutchouc synthétique de cis-1,4-polyisoprène.

7. Pneumatique préparé conformément au procédé selon la revendication 5, dans lequel le composant de caoutchouc de la composition adhésive comprend essentiellement de 35 à 70 phr de caoutchouc naturel de cis-1,4-polyisoprène et, de manière correspondante, de 30 à 65 phr de caoutchouc de cis-1,4-polybutadiène.

8. Pneumatique préparé conformément au procédé selon la revendication 5, dans lequel la bande de caoutchouc adhésive contient de 2 à 10 phr d'huile de résine.
